(19) Europäisches Patentamt
European Patent Office
Office européen des brevets

(11) **EP 3 740 904 B1**

(12) **EUROPÄISCHE PATENTSCHRIFT**

(45) Veröffentlichungstag und Bekanntmachung des Hinweises auf die Patenterteilung:
**03.07.2024   Patentblatt 2024/27**

(21) Anmeldenummer: **19700203.3**

(22) Anmeldetag: **03.01.2019**

(51) Internationale Patentklassifikation (IPC):
**G06N 3/0464** $^{(2023.01)}$   G06N 3/08 $^{(2023.01)}$

(52) Gemeinsame Patentklassifikation (CPC):
**G06N 3/0464;** G06N 3/08

(86) Internationale Anmeldenummer:
**PCT/EP2019/050092**

(87) Internationale Veröffentlichungsnummer:
**WO 2019/137845 (18.07.2019 Gazette 2019/29)**

(54) **VERFAHREN ZUM BETREIBEN EINES KÜNSTLICHEN NEURONALEN NETZES**

METHOD FOR OPERATING AN ARTIFICIAL NEURAL NETWORK

PROCÉDÉ DE FONCTIONNEMENT D'UN RÉSEAU NEURONAL ARTIFICIEL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.01.2018   DE 102018200534**

(43) Veröffentlichungstag der Anmeldung:
**25.11.2020   Patentblatt 2020/48**

(73) Patentinhaber: **Robert Bosch GmbH
70442 Stuttgart (DE)**

(72) Erfinder:
• **MEHNERT, Jens Eric Markus
71272 Malmsheim (DE)**
• **KOEHLER, Rolf Michael
72135 Dettenhausen (DE)**
• **PETRIZIO, Pia
71069 Sindelfingen (DE)**

(56) Entgegenhaltungen:
• **Sergey Ioffe ET AL: "Batch Normalization: Accelerating Deep Network Training by Reducing Internal Covariate Shift", , 2. März 2015 (2015-03-02), Seiten 1-11, XP055266268, Gefunden im Internet: URL:http://arxiv.org/pdf/1502.03167v3.pdf [gefunden am 2016-04-18]**
• **Anonymous: "how to normalize input for each patch during convolution", , 20. Dezember 2016 (2016-12-20), XP055572078, https://github.com Gefunden im Internet: URL:https://github.com/keras-team/keras/issues/4741 [gefunden am 2019-03-20]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Gebiet der Erfindung

Die vorliegende Erfindung betrifft allgemein das Gebiet künstlicher Intelligenz. Insbesondere betrifft die Erfindung ein Verfahren zum Betreiben eines künstlichen neuronalen Netzes sowie ein künstliches neuronales Netz, welches beispielsweise zur Objekterkennung in Fahrzeugen eingesetzt werden kann.

Stand der Technik

Zum Trainieren von künstlichen neuronalen Netzen, insbesondere mehrschichtigen und/oder faltenden neuronalen Netzen, werden dem neuronalen Netz zugeführte Trainingsdaten, wie etwa Trainingsbilder, in der Regel normiert und/oder normalisiert. Dies kann unter anderem einer Homogenisierung der Trainingsdaten eines Trainingsdatensatzes dienen. Auch können durch die Normierung unter Umständen in den Trainingsdaten vorhandene Objekte und/oder Merkmale hervorgehoben und/oder betont werden.
Nach dem Trainieren des neuronalen Netzes und/oder während eines Betriebes des trainierten neuronalen Netzes, was allgemein auch als Inferenz bezeichnet wird, werden in der Regel die dem neuronalen Netz zur Interpretation und/oder Klassifikation zugeführten Eingangsdaten analog den Trainingsdaten normiert und/oder normalisiert. Die Normierung der Eingangsdaten kann dabei rechenintensiv und/oder zeitintensiv sein sowie eine leistungsstarke Hardware zum Durchführen der Normierung erfordern.
In Ioffe et al. "Batch Normalization: Accelerating Deep Network Training by Reducing Internal Covariate Shift", 2015, https://arxiv.org/abs/1502.03167 wird ein Verfahren zur Normierung von Ausgaben einer Schicht eines neuronalen Netzes offenbart.

Offenbarung der Erfindung

Mit Ausführungsformen der Erfindung kann in vorteilhafter Weise ein effizientes und schnelles Verfahren zum Betreiben eines künstlichen neuronalen Netzes bereitgestellt sein. Auch kann mit Ausführungsformen der Erfindung ein verbessertes künstliches neuronales Netz bereitgestellt sein.
Ein erster Aspekt der Erfindung betrifft ein computerimplementiertes Verfahren zum Betreiben eines künstlichen neuronalen Netzes nach Anspruch 1.
Das neuronale Netz kann beispielsweise ein mehrschichtiges künstliches neuronales Netz bezeichnen, welches mehrere Faltungsschichten aufweisen kann. Alternativ oder zusätzlich kann das neuronale Netz ein faltendes neuronales Netz bezeichnen. Beispielsweise kann das neuronale Netz mehrere einander nachgelagerte Faltungsschichten, etwa versteckten Schichten, aufweisen. Die wenigstens eine Faltungsschicht im Kontext der vorliegenden Offenbarung kann beispielsweise eine Eingangsschicht und/oder erste Schicht des neuronalen Netzes, eine der Eingangsschicht nachgelagerte Faltungsschicht und/oder eine versteckte Schicht des neuronalen Netzes bezeichnen.
Die Eingangsmatrix kann allgemein ein beliebiges Eingangsdatenelement der wenigstens einen Faltungsschicht bezeichnen. Weist das neuronale Netz mehrere Faltungsschichten auf, so kann die Eingangsmatrix ein Eingangsdatenelement für jede beliebige dieser Faltungsschichten bezeichnen. Für die Eingangsschicht und/oder die erste Schicht des neuronalen Netzes kann die Eingangsmatrix ein dem neuronalen Netz zugeführtes Eingangsdatenelement, etwa ein Eingangsbild, bezeichnen. Für eine der Eingangsschicht nachgelagerte Faltungsschicht kann die Eingangsmatrix ferner das dieser Faltungsschicht zugeführte Eingangsdatenelement bezeichnen, welches beispielsweise mit einer Ausgangsmatrix einer vorgelagerten Faltungsschicht korrelieren kann und/oder dieser Ausgangsmatrix entsprechen kann. Die Eingangsmatrix kann ferner eine beliebige Dimension aufweisen. Insbesondere kann die Eingangsmatrix eindimensional oder mehrdimensional sein. Mit anderen Worten kann die Eingangsmatrix einen eindimensionalen oder mehrdimensionalen Eingangstensor bezeichnen.
Die Ausgangsmatrix kann ein beliebiges Ausgangsdatenelement der wenigstens einen Faltungsschicht bezeichnen, welches basierend auf der Eingangsmatrix unter Anwendung der Faltungsoperation und der Verschiebungsoperation durch die Faltungsschicht generiert werden kann. Weist das neuronale Netz mehrere Faltungsschichten auf, so kann die Ausgangsmatrix ein Ausgangsdatenelement einer jeden beliebigen Faltungsschicht sein. Bei mehreren einander nachgelagerten Faltungsschichten kann ferner die Ausgangsmatrix einer vorgelagerten Faltungsschicht auch eine Eingangsmatrix einer dieser vorgelagerten Faltungsschicht nachgelagerten Faltungsschicht bilden, mit der Eingangsmatrix der nachgelagerten Faltungsschicht korrelieren und/oder dieser entsprechen. Die Ausgangsmatrix kann ferner eine beliebige Dimension aufweisen. Insbesondere kann die Ausgangsmatrix eindimensional oder mehrdimensional sein. Mit anderen Worten kann die Ausgangsmatrix einen eindimensionalen oder mehrdimensionalen Ausgangstensor bezeichnen. Ferner kann die Ausgangsmatrix dieselbe Dimension wie die Eingangsmatrix der jeweiligen Faltungsschicht oder eine von der Eingangsmatrix der jeweiligen Faltungsschicht verschiedene Dimension aufweisen.

Die ursprüngliche Filtermatrix kann etwa die Filtermatrix der Faltungsschicht bezeichnen, wie sie während des Trainings des neuronalen Netzes verwendet und/oder für diese Faltungsschicht ermittelt wurde. Die modifizierte Filtermatrix kann diejenige Filtermatrix bezeichnen, welche während des Betriebes des trainierten neuronalen Netzes, auch Inferenz genannt, von der zugehörigen Faltungsschicht verwendet wird. Analog kann die ursprüngliche Matrix die Matrix der Faltungsschicht bezeichnen, wie sie während des Trainings des neuronalen Netzes verwendet und/oder für diese Faltungsschicht ermittelt wurde. Die modifizierte Matrixkann diejenige Matrixbezeichnen, welche während des Betriebes des trainierten neuronalen Netzes von der zugehörigen Faltungsschicht verwendet wird.

Die erste Normierungsgröße und die zweite Normierungsgröße können jeweils zur Normierung der Eingangsmatrix dienen und/oder jeweils eine Größe zur Normierung der Eingangsmatrix bezeichnen. Die erste Normierungsgröße und/oder die zweite Normierungsgröße können ein Skalar, ein Vektor, eine Matrix und/oder ein Tensor sein. Allgemein können die erste Normierungsgröße und die zweite Normierungsgröße jeweils eine Größe, etwa eine statistische Größe, sein, welche von Einträgen der Eingangsmatrix und/oder von dem Trainingsdatensatz abgeleitet werden können. Beispielsweise kann die erste Normierungsgröße mit einer Standardabweichung korrelieren und/oder die zweite Normierungsgröße kann mit einem Mittelwert korrelieren. Der Mittelwert kann dabei auch ein gewichteter Mittelwert sein, wobei beispielsweise Einträge der Eingangsmatrix unterschiedlich gewichtet sein können und/oder einzelne Trainingsbilder des Trainingsdatensatz unterschiedlich gewichtet sein können. Auch können die erste Normierungsgröße und die zweite Normierungsgröße höhere Momente einer Statistik sein, etwa eine Skewness bzw. Schiefe oder eine Kurtosis bzw. Wölbung. Allgemein können im Rahmen des erfindungsgemäßen Verfahrens beliebig viele Normierungsgrößen ermittelt werden, mit Hilfe derer die Eingangsmatrix unter Anwendung einer Addition, Subtraktion, Multiplikation und/oder Division normiert werden kann.

Die Erfindung kann insbesondere als auf den nachfolgend beschriebenen Erkenntnissen beruhend angesehen werden. Während des Trainings von künstlichen neuronalen Netzen können Trainingsdatenelemente, wie beispielsweise Trainingsbilder, dadurch normiert und/oder normalisiert werden, dass ein Mittelwert von Einträgen der Trainingsdatenelemente abgezogen und Einträge der Trainingsdatenelemente durch eine Standardabweichung geteilt werden. Der Mittelwert und die Standardabweichung können dabei globale Werte sein und/oder basierend auf einem gesamten Trainingsdatensatz mit mehreren Trainingsdatenelementen ermittelt werden. Sämtliche Trainingsdatenelemente, sämtliche Eingangsdatenelemente und/oder sämtliche Eingangsmatrizen einzelner Faltungsschichten können sodann mit den globalen Werten der Standardabweichung und des Mittelwertes normiert werden. Alternativ können der Mittelwert und die Standardabweichung lokale Werte sein, welche für jedes dem neuronalen Netz zugeführte Trainingsdatenelement und/oder jedes dem neuronalen Netz zugeführte Eingangsdatenelement separat ermittelt und zur Normierung verwendet werden können. In konventionellen Verfahren zum Betreiben von neuronalen Netzen und/oder in konventionellen neuronalen Netzen wird während des Betriebes des trainierten neuronalen Netzes in der Regel jedes in das neuronale Netz eingespeiste Eingangsdatenelement, etwa ein Eingangsbild, auf diese Weise normiert. Auch können die Eingangsmatrizen einer oder mehrerer Faltungsschichten auf diese Weise normiert werden. Dies kann mitunter einen erheblichen Rechenaufwand und/oder Rechenzeit erfordern.

Erfindungsgemäß ist daher vorgesehen, die Normierung und/oder Normalisierung mit der von der Faltungsschicht vorgenommenen Faltungsoperation und/oder der Verschiebungsoperation zu kombinieren. In der modifizierten Filtermatrix und der modifizierten Matrixkann somit eine Normierungsoperation, insbesondere eine lineare Normierungsoperation, zur Normierung der Eingangsmatrix enthalten und/oder integriert sein. Die Normierungsoperation kann dabei allgemein eine Addition, Subtraktion, Division und/oder Multiplikation der Eingangsmatrix mit der ersten Normierungsgröße und/oder der zweiten Normierungsgröße und/oder mit weiteren Normierungsgrößen beinhalten. Insbesondere kann die Normierungsoperation ein Abziehen eines Mittelwertes von Einträgen der Eingangsmatrix und/oder ein Teilen der Einträge der Eingangsmatrix durch die Standardabweichung beinhalten. Durch Berücksichtigung und/oder Integration der der ersten Normierungsgröße und der zweiten Normierungsgröße in die modifizierte Filtermatrix und die modifizierte Matrixkönnen somit die Faltungsoperation, die Verschiebungsoperation und die Normierungsoperation kombiniert und/oder in einem Schritt ausgeführt werden. Ein separater Schritt zum Durchführen der Normierungsoperation kann somit entfallen. Mit anderen Worten kann durch Integration der ersten und/oder zweiten Normierungsgröße in die modifizierte Filtermatrix und/oder die modifizierte Matrix die Normierungsoperation in die modifizierte Filtermatrix und/oder die modifizierte Matrixintegriert werden. Das Kombinieren der Normierung mit der Faltungsoperation und/oder der Verschiebungsoperation kann in einer Eingangsschicht und/oder ersten Schicht des neuronalen Netzes erfolgen, über welche dem neuronalen Netz Eingangsdatenelemente, wie Eingangsbilder, zugeführt werden können. Alternativ oder zusätzlich kann auch die von einer beliebigen anderen Faltungsschicht auf eine Eingangsmatrix dieser Faltungsschicht angewendete Faltungsoperation und/oder Verschiebungsoperation mit der zugehörigen Normierungsoperation dieser Eingangsmatrix kombiniert werden. Dadurch kann eine explizite und/oder separate Normierung der Eingangsdatenelemente und/oder der Eingangsmatrizen vermieden werden. Insgesamt kann damit Rechenaufwand und/oder Rechenzeit reduziert werden, so dass das neuronale Netz schneller und effizienter ausgestaltet werden kann. Auch kann das trainierte neuronale Netz daher auf nahezu beliebiger Hardware ausgeführt werden und/oder auf diese portiert werden, während nur wenig Performanz oder gar keine Performanz der Hardware beeinträchtigt wird. Auch kann so die zum Betreiben des neuronalen Netzes verwendete Hardware, insbesondere ein Prozessor und/oder ein Grafikprozessor, weniger leistungsstark ausgeführt sein, wodurch Kosten eingespart werden können.

Gemäß einer Ausführungsform der Erfindung ist die erste Normierungsgröße eine mit einer Standardabweichung korrelierende Größe und/oder eine Standardabweichung. Die erste Normierungsgröße kann etwa auch ein Kehrwert der Standardabweichung sein und/oder mit dem Kehrwert der Standardabweichung korrelieren. Alternativ oder zusätzlich ist die zweite Normierungsgröße eine mit einem Mittelwert korrelierende Größe und/oder ein Mittelwert. Die zweite Normierungsgröße kann auch beispielsweise ein negatives Verhältnis des Mittelwertes zur Standardabweichung sein und/oder mit diesem Verhältnis korrelieren. Die erste und zweite Normierungsgröße können basierend auf Einträgen der Eingangsmatrix und/oder basierend auf einem Trainingsdatensatz ermittelt werden.

Gemäß einer Ausführungsform der Erfindung wird die modifizierte Filtermatrix basierend auf, insbesondere ausschließlich basierend auf, der ursprünglichen Filtermatrix und der ermittelten ersten Standardabweichung bestimmt. Alternativ oder zusätzlich wird die modifizierte Matrix basierend auf der ursprünglichen Matrix, basierend auf der ermittelten Standardabweichung und basierend auf dem ermittelten Mittelwert bestimmt. Somit können die zur Normierung der Eingangsmatrix verwendete Standardabweichung und der Mittelwert in die modifizierte Filtermatrix und/oder die modifizierte Matrix integriert werden, so dass eine separat durchzuführende Normierung der Eingangsmatrix entfallen kann.

Gemäß einer Ausführungsform der Erfindung ist der ermittelte Mittelwert ein Mittelwert von Einträgen der Eingangsmatrix. Alternativ oder zusätzlich ist die ermittelte Standardabweichung eine Standardabweichung von Einträgen der Eingangsmatrix. Der Mittelwert und die Standardabweichung können daher als lokale Werte für die Eingangsmatrix der Faltungsschicht ermittelt werden. Für jede Eingangsmatrix kann so jeweils ein dieser Eingangsmatrix zugeordneter Mittelwerte und/oder eine dieser Eingangsmatrix zugeordnete Standardabweichung ermittelt werden. Handelt es sich bei der zugehörigen Faltungsschicht um die Eingangsschicht, so kann der ermittelte Mittelwert ein Mittelwert der Einträge des zugehörigen Eingangsdatenelements, etwa ein Mittelwert von Pixeln eines Eingangsbildes, sein. Analog kann die Standardabweichung eine Standardabweichung der Einträge des zugehörigen Eingangsdatenelements, etwa von Pixeln des Eingangsbildes, sein.

Gemäß einer Ausführungsform der Erfindung weist der Trainingsdatensatz mehrere Trainingsdatenelemente, insbesondere Trainingsbilder, auf, wobei die Standardabweichung und der Mittelwert basierend auf den Trainingsdatenelementen des Trainingsdatensatzes ermittelt werden. Der Mittelwert und die Standardabweichung können daher als globale Werte für die Eingangsmatrix der Faltungsschicht ermittelt werden. Für jede beliebige Eingangsmatrix und/oder jedes beliebige Eingangsdatenelement kann daher der gleiche Mittelwert und die gleiche Standardabweichung verwendet werden. Dies kann den erforderlichen Rechenaufwand und/oder die Rechenzeit weiter senken.

Gemäß einer Ausführungsform der Erfindung weist der Schritt des Überführens der Eingangsmatrix in die Ausgangsmatrix ein Falten der Eingangsmatrix mit der modifizierten Filtermatrix und ein Addieren der modifizierten Matrix mit der gefalteten Eingangsmatrix auf. Wie voranstehend erläutert können die modifizierte Filtermatrix und die modifizierte Matrix die Normierungsoperation zur Normierung der Eingangsmatrix enthalten. Somit kann in der Faltungsschicht die Eingangsmatrix gleichzeitig normiert, gefaltet und/oder verschoben werden, um die Ausgangsmatrix zu generieren. Daher muss die Eingangsmatrix nicht mehr vor Zuführen zu der Faltungsschicht normiert werden, sondern sämtlich auf die Eingangsmatrix angewendete Rechenoperationen können in einem Schritt erfolgen.

Gemäß einer Ausführungsform der Erfindung weist der Schritt des Ermittelns der modifizierten Filtermatrix ein Bilden eines Verhältnisses von Einträgen der ursprünglichen Filtermatrix und der ermittelten Standardabweichung auf. Mit anderen Worten kann die modifizierte Filtermatrix dadurch ermittelt werden, dass die Einträge der ursprünglichen Filtermatrix durch die ermittelte Standardabweichung geteilt werden. Dadurch kann sichergestellt sein, dass die Eingangsmatrix korrekt normiert ist. Die Einträge der ursprünglichen Filtermatrix können dabei Parameterwerte und/oder Gewichte der jeweiligen Faltungsschicht bezeichnen, wie sie während eines Trainings des neuronalen Netzes ermittelt wurden.

Gemäß einer Ausführungsform der Erfindung weist der Schritt des Ermittelns der modifizierten Matrix einen Schritt des Faltens der modifizierten Filtermatrix mit einer Normierungsmatrix auf, wobei alle Einträge der Normierungsmatrix den ermittelten Mittelwert aufweisen, und einen Schritt des Subtrahierens der mit der Normierungsmatrix gefalteten modifizierten Filtermatrix von der ursprünglichen Matrix. Mit anderen Worten kann die modifizierte Matrix dadurch ermittelt werden, dass die Differenz der ursprünglichen Matrix und des Ergebnisses einer Faltung zwischen der Normierungsmatrix und der modifizierten Filtermatrix gebildet wird. Dadurch kann sichergestellt sein, dass die Eingangsmatrix korrekt normiert ist. Dabei können Einträge der ursprünglichen Matrix Parameterwerte und/oder Gewichte der jeweiligen Faltungsschicht bezeichnen, wie sie während eines Trainings des neuronalen Netzes ermittelt wurden.

Gemäß einer Ausführungsform der Erfindung weist das Verfahren ferner einen Schritt des Überführens der Eingangsmatrix in eine höherdimensionale Eingangsmatrix unter Hinzufügen von Einträgen zu der Eingangsmatrix auf. Dabei weisen, wenn das neuronale Netz trainiert ist und/oder während eines Betriebes des trainierten neuronalen Netzes bzw. während Inferenz, die hinzugefügten Einträge jeweils den ermittelten Mittelwert auf. Alternativ oder zusätzlich weisen während eines Trainings des neuronalen Netzes die hinzugefügten Einträge jeweils einen Wert von Null auf.

Durch Hinzufügen von Einträgen zur Eingangsmatrix kann in vorteilhafter Weise eine Dimension der Ausgangsmatrix nach Anwenden der Faltungsoperation mit einer Dimension der Eingangsmatrix vor Hinzufügen der Einträge übereinstimmen. Das Hinzufügen von Einträgen wird häufig auch als "Padding" bezeichnet. Werden daher während des Trainings des neuronalen Netzes der Eingangsmatrix einer Faltungsschicht Nullen hinzugefügt, so können der Eingangsmatrix für diese Faltungsschicht nach dem Training, d.h. während des Betriebes des trainierten Netzes, Einträge mit dem Mittelwert hinzugefügt werden.

Gemäß einer Ausführungsform der Erfindung weisen, wenn das neuronale Netz trainiert ist, die der Eingangsmatrix hinzugefügten Einträge jeweils einen Wert von Null auf. Alternativ oder zusätzlich weisen während des Trainings des neuronalen Netzes die hinzugefügten Einträge jeweils einen negativen Wert des Verhältnisses des ermittelten Mittelwertes zu der ermittelten Standardabweichung auf. Werden daher während des Trainings des neuronalen Netzes der Eingangsmatrix einer Faltungsschicht Einträge hinzugefügt, welche dem Negativen des Verhältnisses des ermittelten Mittelwertes zu der ermittelten Standardabweichung entsprechen, so können der Eingangsmatrix für diese Faltungsschicht nach dem Training, d.h. während des Betriebes des trainierten Netzes, Nullen hinzugefügt werden. Insbesondere kann so die Dimension der Ausgangsmatrix erhalten bleiben und/oder mit der Dimension der Eingangsmatrix vor Hinzufügen der Einträge übereinstimmen.

Gemäß einer Ausführungsform der Erfindung ist die wenigstens eine Faltungsschicht eine Eingangsschicht und/oder eine erste Schicht des neuronalen Netzes. Alternativ oder zusätzlich ist die Eingangsmatrix ein Eingangsdatenelement, insbesondere ein Eingangsbild, welches dem neuronalen Netz zur Interpretation und/oder Klassifikation zugeführt wird. Das Eingangsdatenelement kann dabei eine beliebige Dimension aufweisen und/oder ein Eingangsbild mit einem Array beliebig vieler Pixel sein. Die Pixel des Eingangsbildes können dabei Einträge des Eingangsdatenelements und/oder Einträge der Eingangsmatrix der Eingangsschicht sein.

Gemäß einer Ausführungsform der Erfindung werden die modifizierte Filtermatrix und die modifizierte Matrix ausschließlich in der Eingangsschicht des neuronalen Netzes angewendet. Damit kann eine Effizienz des Verfahrens zum Betreiben des neuronalen Netzes weiter gesteigert sein und/oder der Rechenaufwand bzw. die Rechenzeit kann weiter reduziert sein.

Gemäß einer Ausführungsform der Erfindung weist das neuronale Netz mehrere Faltungsschichten auf, welche jeweils dazu eingerichtet sind, eine Eingangsmatrix der jeweiligen Faltungsschicht in eine Ausgangsmatrix der jeweiligen Faltungsschicht zu überführen, wobei für jede Faltungsschicht eine modifizierte Faltungsmatrix und eine modifizierte Matrix ermittelt werden, und wobei jede Eingangsmatrix jeder Faltungsschicht unter Anwendung der für die jeweilige Faltungsschicht ermittelten modifizierten Filtermatrix und der für die jeweilige Faltungsschicht ermittelten modifizierten Matrix in eine Ausgangsmatrix überführt wird. Die modifizierte Filtermatrix und die modifizierte Matrix können dabei basierend auf der ursprünglichen Filtermatrix und der ursprünglichen Matrix der jeweiligen Faltungsschicht ermittelt werden.

Gemäß einer Ausführungsform der Erfindung bildet eine Ausgangsmatrix wenigstens einer Faltungsschicht eine Eingangsmatrix wenigstens einer dieser Faltungsschicht nachgelagerten Faltungsschicht, so dass der Mittelwert und die Standardabweichung für die nachgelagerte Faltungsschicht basierend auf dieser Ausgangsmatrix ermittelt werden. Mit anderen Worten kann die Ausgangsmatrix einer vorgelagerten Faltungsschicht der Eingangsmatrix einer dieser vorgelagerten Faltungsschicht unmittelbar nachgelagerten Faltungsschicht entsprechen.

Ein weiterer Aspekt der Erfindung betrifft ein computerimplementiertes künstliches neuronales Netz nach Anspruch 10.

Dabei können Einträge der modifizierten Filtermatrix mit einem Verhältnis von Einträgen einer ursprünglichen Filtermatrix der Faltungsschicht und einer Standardabweichung korrelieren. Die Einträge der modifizierten Filtermatrix können etwa durch das Verhältnis der Einträge der ursprünglichen Filtermatrix und der Standardabweichung gegeben sein. Ferner können Einträge der modifizierten Matrix mit einer Differenz einer ursprünglichen Matrix und dem Ergebnis einer Faltung der modifizierten Filtermatrix mit einer Normierungsmatrix korrelieren, deren Einträge jeweils den ermittelten Mittelwert aufweisen. Mit anderen Worten können die Einträge der modifizierten Matrix durch die Differenz der ursprünglichen Matrix und dem Ergebnis der Faltung der modifizierten Filtermatrix mit der Normierungsmatrix gegeben sein. Die Standardabweichung und der Mittelwert können dabei basierend auf Einträgen der Eingangsmatrix und/oder basierend auf einem Trainingsdatensatz des neuronalen Netzes ermittelt sein.

Das erfindungsgemäße Verfahren zum Betreiben des neuronalen Netzes und/oder das neuronale Netz kann in vielen Bereichen der Industrie vorteilhaft eingesetzt werden. Insbesondere kann das Verfahren und/oder das neuronale Netz im Bereich des autonomen Fahrens, etwa in einem Kraftfahrzeug, eingesetzt werden. Beispielsweise kann das Verfahren und/oder das neuronale Netz zur Objekterkennung basierend auf Bilddaten eingesetzt werden. Mit dem erfindungsgemäßen Verfahren und dem neuronalen Netz kann insbesondere eine Erkennung von Verkehrszeichen, von Fußgängern, von Hindernissen und/oder anderen Objekten in den Bilddaten durchgeführt werden. Beispielsweise können Bilddaten und/oder Bilder mit einer Kamera eines Kraftfahrzeuges aufgenommen und dem neuronalen Netz zur Objekterkennung zugeführt werden. Das neuronale Netz kann die Bilddaten interpretieren, prozessieren und/oder verarbeiten. Dabei kann das neuronale Netz insbesondere eine Klassifikation von in den Bilddaten enthaltenen Objekten vornehmen und eine entsprechende Ausgabe ausgeben. Beispielsweise kann das neuronale Netz basierend auf der Verarbeitung der Bilddaten wenigstens einen Wahrscheinlichkeitswert und/oder eine Wahrscheinlichkeit ermitteln, mit welcher ein in den Bilddaten enthaltenes Objekt einer bestimmten Klasse von Objekten und/oder einer Objektklasse zugeordnet werden kann. Alternativ oder zusätzlich kann das neuronale Netz die Klasse von Objekten und/oder Objektklasse ermitteln, welcher das in den Bilddaten enthaltene Objekt zugeordnet werden kann. Die Objektklasse und/oder der wenigstens eine Wahrscheinlichkeitswert können von dem neuronalen Netz ausgegeben und/oder bereitgestellt werden. Die Ausgabe kann beispielsweise einem Steuergerät des Kraftfahrzeugs zugeführt werden, welches basierend auf der Ausgabe eine Fahrzeugansteuerung ableiten kann, beispielsweise ein Ausweichmanöver und/oder ein Bremsmanöver. Das Steuergerät kann ferner das Kraftfahrzeug zur Durchführung der abgeleiteten bzw. ermittelten Fahrzeugansteuerung veranlassen, insbesondere zur Durchführung des Ausweichmanövers und/oder des Bremsmanövers. Folglich kann mittels des neuronalen Netzes ein Verfahren zur Betreiben eines Fahrzeugs realisiert werden. Alternativ oder zusätzlich kann basierend auf der Ausgabe des neuronalen Netzes eine Warneinrichtung, etwa zur Ausgabe eines akustischen und/oder optischen Warnsignals, betätigt werden.

Auch kann das Verfahren und das neuronale Netz in vorteilhafter Weise zur Segmentation von Bilddaten eingesetzt werden. Ferner kann das Verfahren und das neuronale Netz zur Analyse medizinischer Bilder und/oder medizinischer Bilddaten eingesetzt werden, etwa um eine Zuckerkrankheit eines Patienten zu erkennen. Auch in der Robotik, etwa zur Steuerung eines Roboters, insbesondere basierend auf Bilddaten, kann das Verfahren und das neuronale Netz eingesetzt und/oder verwendet werden. Ein weiterer möglicher Einsatzbereich des neuronalen Netzes und/oder des Verfahrens ist die Qualitätskontrolle, etwa zum Identifizieren von mangelhaft produzierten Gütern basierend auf Bilddaten und/oder anderen Daten.

Im Folgenden werden Ausführungsbeispiele der Erfindung unter Bezugnahme auf die beigefügten Zeichnungen erläutert.

Kurze Beschreibung der Zeichnungen

Im Folgenden werden Ausführungsbeispiele der Erfindung mit Bezug auf die beiliegenden Figuren detailliert beschrieben.

Fig. 1 zeigt ein künstliches neuronales Netz gemäß einem Ausführungsbeispiel der Erfindung.

Fig. 2 zeigt ein Flussdiagramm zur Illustration von Schritten eines Verfahrens zum Betreiben eines neuronalen Netzes gemäß einem Ausführungsbeispiel der Erfindung.

Fig. 3 zeigt ein Flussdiagramm zur Illustration von Schritten eines Verfahrens zum Betreiben eines neuronalen Netzes gemäß einem Ausführungsbeispiel der Erfindung.

Fig. 4 zeigt ein Flussdiagramm zur Illustration von Schritten eines Verfahrens zum Betreiben eines neuronalen Netzes gemäß einem Ausführungsbeispiel der Erfindung.

Die Figuren sind lediglich schematisch und nicht maßstabsgetreu. In den Figuren sind gleiche, gleich wirkende oder ähnliche Elemente mit gleichen Bezugszeichen versehen.

Ausführungsformen der Erfindung

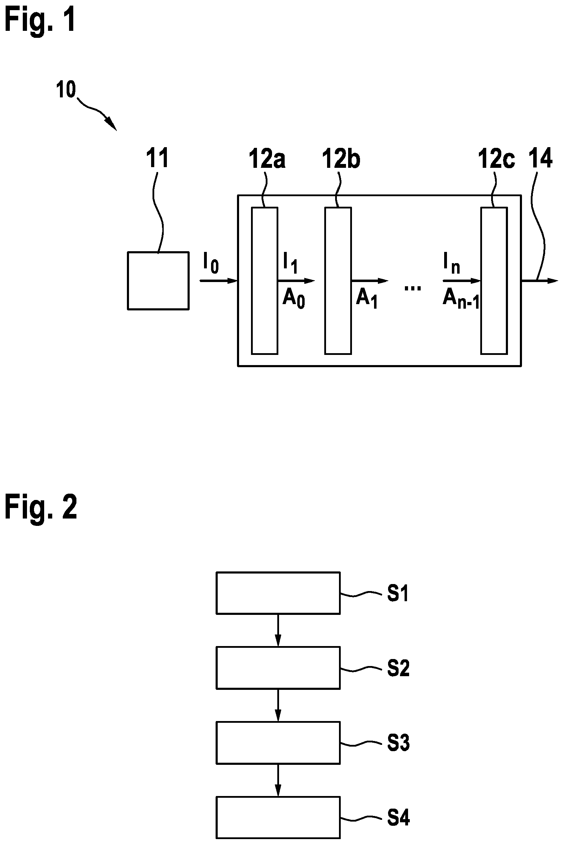

Fig. 1 zeigt ein künstliches neuronales Netz 10 gemäß einem Ausführungsbeispiel der Erfindung. Das in Figur 1 illustrierte künstliche neuronale Netz 10 ist exemplarisch als mehrschichtiges neuronales Netz 10 ausgeführt.

Das neuronale Netz 10 kann etwa zur Interpretation von Bilddaten dienen, beispielsweise im Rahmen einer Objekterkennung in einem Kraftfahrzeug. Das neuronale Netz 10 kann beispielsweise mit einer Speichervorrichtung 11 gekoppelt sein und/oder eine Speichervorrichtung 11 zum Speichern von Bilddaten aufweisen. Die Bilddaten können etwa mit einer Kamera des Kraftfahrzeugs aufgenommen und in der Speichervorrichtung 11 zur weiteren Verarbeitung und/oder Interpretation durch das neuronale Netz 10 hinterlegt sein. Die Bilddaten können dabei eines oder mehrere Bilder aufweisen, welche dem neuronalen Netz 10 zugeführt werden können und/oder welche in das neuronale Netz 10 eingespeist werden können.

Das künstliche neuronale Netz 10 weist eine Eingangsschicht 12a und/oder eine erste Schicht 12a auf, welcher eine Eingangsmatrix $I_0$ zugeführt wird. In der Regel ist die Eingangsschicht 12a eines neuronalen Netzes 10 eine Faltungsschicht. Die erste Schicht und/oder die Eingangsschicht 12a kann daher eine erste Faltungsschicht 12a des neuronalen Netzes 10 bezeichnen. Die der Eingangsschicht 12a zugeführte Eingangsmatrix $I_0$ kann etwa ein Eingangsdatenelement $I_0$ und/oder ein Eingangsbild $I_0$ sein. Das Eingangsdatenelement, das Eingangsbild und/oder die Ein-

gangsmatrix $I_0$ der ersten Schicht 12a kann dabei ein beliebiges Array mit einer beliebigen Anzahl von Pixeln sein, wobei die Pixel Einträgen der Eingangsmatrix $I_0$ entsprechen. Das Eingangsdatenelement, das Eingangsbild und/oder die Eingangsmatrix $I_0$ der Eingangsschicht 12a kann dabei insbesondere ein einzelnes Bild der in der Speichervorrichtung 11 hinterlegten Bilddaten sein. Das Eingangsdatenelement, das Eingangsbild und/oder die Eingangsmatrix $I_0$ der Eingangsschicht 12a kann dabei dem neuronalen Netz 10 ohne eine Vorverarbeitung zugeführt werden, insbesondere ohne vorab eine Normierung und/oder Normalisierung durchzuführen, wie im Folgenden näher erläutert ist.

Weiter weist das neuronale Netz 10 mehrere Faltungsschichten 12b, 12c auf. Das neuronale Netz 10 kann eine beliebige Anzahl von Faltungsschichten 12b, 12c aufweisen. Die Faltungsschicht 12b ist dabei der Eingangsschicht 12a unmittelbar nachgelagert und/oder mit dieser gekoppelt. Analog ist die Faltungsschicht 12c der Faltungsschicht 12b nachgelagert, wobei optional zwischen den Faltungsschichten 12b, 12c weitere Faltungsschichten und/oder weitere Schichten des neuronalen Netzes 10 angeordnet sein können.

Die Eingangsschicht 12a und die Faltungsschichten 12b, 12c sind allgemein dazu eingerichtet die der jeweiligen Schicht 12a-c zugeführte Eingangsmatrix $I_0$, $I_1$, $I_n$ basierend auf einer Faltungsoperation und einer Verschiebungsoperation, insbesondere einer linearen Verschiebung, in eine Ausgangsmatrix $A_0$, $A_1$, $A_{n-1}$ der jeweiligen Schicht 12a-c zu überführen. Mit anderen Worten ist jede der Schichten 12a-c dazu ausgeführt, eine Faltungsoperation und eine Verschiebungsoperation durchzuführen. Die Eingangsschicht 12a erzeugt in dem in Figur 1 illustrierten Ausführungsbeispiel durch Anwendung der Faltungsoperation und der Verschiebungsoperation aus der Eingangsmatrix $I_0$ eine Ausgangsmatrix $A_0$ der Eingangsschicht 12a. Basierend auf der Ausgangsmatrix $A_0$ der Eingangsschicht 12a kann sodann eine Eingangsmatrix $I_1$ für die der Eingangsschicht 12a unmittelbar nachgelagerte Faltungsschicht 12b generiert werden. Hierzu kann die Ausgangsmatrix $A_0$ der Eingangsschicht 12a modifiziert werden und/oder die Ausgangsmatrix $A_0$ der Eingangsschicht 12a kann die Eingangsmatrix $I_1$ der Faltungsschicht 12b bilden. Analog kann eine Ausgangsmatrix $A_{n-1}$ einer der Faltungsschicht 12c unmittelbar vorgelagerten Faltungsschicht die Eingangsmatrix $I_n$ der Faltungsschicht 12c bilden, wie in Figur 1 illustriert.

Details der von jeder der Faltungsschichten 12a-c durchgeführten Faltungsoperation und der Verschiebungsoperation werden in nachfolgenden Figuren erläutert.

Als Ergebnis einer Verarbeitung und/oder Interpretation der Eingangsmatrix, des Eingangsdatenelements und/oder des Eingangsbildes $I_0$ kann das neuronale Netz 10 eine Ausgabe 14 ermitteln, bereitstellen und/oder ausgeben. Die Ausgabe 14 kann beispielsweise eine Objektklasse sein, welcher ein in dem Eingangsbild $I_0$ enthaltenes Objekt zugeordnet werden kann. Alternativ oder zusätzlich kann die Ausgabe 14 einen oder mehrere Wahrscheinlichkeitswerte aufweisen. Jeder Wahrscheinlichkeitswert kann dabei eine Wahrscheinlichkeit angeben, mit der ein in dem Eingangsbild $I_0$ enthaltenes Objekt einer bestimmten Objektklasse zugeordnet werden kann.

Wird das neuronale Netz 10 zur Erkennung eines Hindernisses in einem Kraftfahrzeug verwendet, kann die Ausgabe 14 ferner einem Steuergerät des Kraftfahrzeugs zugeführt werden, welches basierend auf der Ausgabe 14 beispielsweise ein Ausweichmanöver und/oder ein Bremsmanöver ermitteln und das Kraftfahrzeug zur Durchführung dieses Ausweichmanövers und/oder Bremsmanövers veranlassen kann.

Fig. 2 zeigt ein Flussdiagramm zur Illustration von Schritten eines Verfahrens zum Betreiben eines neuronalen Netzes 10 gemäß einem Ausführungsbeispiel der Erfindung. Sofern nicht anders beschrieben, weist das in Figur 2 beschriebene neuronale Netz 10 dieselben Elemente und Merkmale wie das mit Bezug auf Figur 1 beschrieben neuronale Netz 10 auf.

Allgemein weist das mit Bezug auf Figur 2 beschriebene neuronale Netz 10 wenigstens eine Faltungsschicht 12a-c auf, welche dazu eingerichtet ist, eine Eingangsmatrix $I_i$, i=0...n in eine Ausgangsmatrix $A_i$, i=0...n zu überführen. Zur Vereinfachung werden im Folgenden die Indizes i=0...n weggelassen. Das im Folgenden beschriebene Verfahren kann für jede beliebige Faltungsschicht 12a-c durchgeführt werden. Mit anderen Worten kann sich das im Folgenden beschriebene Verfahren auf eine, mehrere oder alle Faltungsschichten 12a-c beziehen.

In einem ersten Schritt S1 wird wenigstens eine erste Normierungsgröße v und eine zweite Normierungsgröße w bestimmt. Die erste Normierungsgröße v kann dabei mit einer Standardabweichung $\sigma$ korrelieren, ein Kehrwert der Standardabweichung sein und/oder eine Standardabweichung $\sigma$ sein. Die zweite Normierungsgröße w kann mit einem Mittelwert $\mu$ korrelieren, ein Mittelwert $\mu$ sein und/oder das negative Verhältnis der des Mittelwerts zur Standardabweichung sein. Die erste Normierungsgröße v, die zweite Normierungsgröße w, die Standardabweichung $\sigma$ und/oder der Mittelwert $\mu$ können dabei basierend auf der Eingangsmatrix I und/oder basierend auf Einträgen der Eingangsmatrix I der jeweiligen Faltungsschicht 12a-c ermittelt werden. Hierzu kann der Mittelwert $\mu$ als Mittelwert $\mu$ aller Einträge der Eingangsmatrix I ermittelt werden. Auch können einzelne Einträge der Eingangsmatrix zur Ermittlung des Mittelwerts $\mu$ unterschiedlich gewichtet werden. Analog kann die Standardabweichung $\sigma$ als Standardabweichung $\sigma$ aller Einträge der Eingangsmatrix I ermittelt werden. Die Standardabweichung $\sigma$ und der Mittelwert $\mu$ können dabei für eine oder mehrere Faltungsschichten 12a-c jeweils für die entsprechende Faltungsschicht 12a-c basierend auf der dieser Faltungsschicht 12a-c zugeführten Eingangsmatrix I ermittelt werden.

Alternativ oder zusätzlich können die erste Normierungsgröße v, die zweite Normierungsgröße w, die Standardabweichung $\sigma$ und/oder der Mittelwert $\mu$ basierend auf einem Trainingsdatensatz des neuronalen Netzes 10 ermittelt werden. Der Trainingsdatensatz kann mehrere Trainingsdatenelemente, insbesondere mehrere Trainingsbilder, aufweisen. Der Mittelwert $\mu$ kann somit ein Mittelwert aller Einträge aller Trainingsdatenelemente des Trainingsdatensatzes sein. Auch können einzelne Trainingsbilder zur Ermittlung des Mittelwertes $\mu$ unterschiedlich gewichtet werden. Analog kann die Standardabweichung $\sigma$ eine Standardabweichung aller Einträge aller Trainingsdatenelemente des Trainingsdatensatzes sein. Die auf diese Weise ermittelte Standardabweichung $\sigma$ und der Mittelwert $\mu$ können dann für eine, mehrere oder alle Faltungsschichten 12a-c verwendet werden.

Die erste Normierungsgröße v und/oder die zweite Normierungsgröße, insbesondere die Standardabweichung und/oder der Mittelwert $\mu$, können in Schritt S1 auch modifiziert werden, etwa durch Addieren eines Wertes und/oder durch Multiplizieren mit einem Faktor.

In einem weiteren Schritt S2 wird eine modifizierte Filtermatrix /basierend auf einer ursprünglichen Filtermatrix f der Faltungsschicht 12a-c und basierend auf der ermittelten ersten Normierungsgröße v, etwa der ermittelten Standardabweichung $\sigma$, bestimmt.

In einem weiteren Schritt S3 wird eine modifizierte Matrix $\tilde{b}$ basierend auf einer ursprünglichen Matrix b der Faltungsschicht 12a-c, basierend auf der ersten Normierungsgröße v und basierend auf der zweiten Normierungsgröße w bestimmt. Die modifizierte Matrix $\tilde{b}$ kann etwa basierend auf der ursprünglichen Matrix b der Faltungsschicht 12a-c, basierend auf der ermittelten Standardabweichung $\sigma$ und basierend auf dem ermittelten Mittelwert $\mu$ bestimmt werden.

In der modifizierten Filtermatrix $\tilde{f}$ und der modifizierten Matrix $\tilde{b}$ kann daher eine Normierungsoperation für die Eingangsmatrix I enthalten sein, so dass die von der Faltungsschicht 12a-c durchgeführte Faltungsoperation sowie die von der Faltungsschicht 12a-c durchgeführte Verschiebungsoperation mit der Normierungsoperation kombiniert werden können. Dadurch kann eine explizite und/oder separate Normierung der Eingangsmatrix I vermieden werden.

Bei konventionellen Verfahren zum Betreiben eines neuronalen Netzes wird die Eingangsmatrix I zunächst normiert und anschließend mit der ursprünglichen Filtermatrix f gefaltet und mit der ursprünglichen Matrix b verschoben. Allgemein kann die Eingangsmatrix I mit Hilfe der ersten Normierungsgröße v und der zweiten Normierungsgröße w normiert und/oder normalisiert werden. Im Speziellen können Einträge der Eingangsmatrix I und/oder die Eingangsmatrix I zur Normierung mit der ersten Normierungsgröße v multipliziert werden und die zweite Normierungsgröße w kann mit dem Ergebnis dieser Multiplikation addiert werden. In konventionellen neuronalen Netzen wird sodann die normierte Eingangsmatrix I mit der ursprünglichen Filtermatrix f gefaltet und mit der ursprünglichen Matrix b verschoben, wie in nachfolgender Gleichung angegeben.

$$(vI + w) * f + b$$

Mit der in Schritt S2 ermittelten modifizierten Filtermatrix $\tilde{f}$ sowie der in Schritt S3 ermittelten modifizierten Matrix $\tilde{b}$ lässt sich voranstehende Gleichung wie folgt umformulieren.

$$(vI + w) * f + b = I * vf + w * f + b = I * \tilde{f} + \tilde{b},$$

wobei

$$\tilde{f} = vf$$

die modifizierte Filtermatrix und

$$\tilde{b} = w * f + b$$

die modifizierte Matrix sind.

In einem weiteren Schritt S4 wird sodann die Eingangsmatrix I in die Ausgangsmatrix A überführt. Hierzu wird die Eingangsmatrix I mit der modifizierten Filtermatrix $\tilde{f}$ gefaltet und das Ergebnis dieser Faltung wird durch Addition mit der modifizierten Matrix $\tilde{b}$ verschoben, wie in nachfolgender Gleichung angegeben:

$$I * \tilde{f} + \tilde{b} = A.$$

Im Folgenden wird das voranstehend erläuterte Verfahren für den Fall beschreiben, dass die erste Normierungsgröße v eine mit der Standardabweichung $\sigma$ korrelierende Größe ist und dass die zweite Normierungsgröße w eine mit dem Mittelwert μ korrelierende Größe ist.

In konventionellen neuronalen Netzen 10 und/oder in einem konventionellen Verfahren zum Betreiben des neuronalen Netzes 10 wird zum Normieren der Eingangsmatrix häufig von jedem Eintrag der Eingangsmatrix I der Mittelwert μ abgezogen und das Ergebnis dieser Differenz wird durch die Standardabweichung σ geteilt. Das Ergebnis dieser Normierung wird sodann mit der ursprünglichen Filtermatrix f gefaltet und mit der ursprünglichen Matrix b linear verschoben, wie in nachfolgender Gleichung angegeben.

$$\frac{I - \tilde{\mu}}{\sigma} * f + b,$$

wobei $\tilde{\mu}$ eine Normierungsmatrix und/oder Mittelwertmatrix ist, deren Einträge alle den Mittelwert μ aufweisen und welche dieselbe Dimension wie die Eingangsmatrix I aufweist. Die ursprüngliche Matrix b weist dieselbe Dimension wie das Ergebnis der Faltung der normierten Eingangsmatrix mit der ursprünglichen Filtermatrix f auf, und alle Einträge der Matrix b weisen einen konstanten Wert b auf.

Mit der in Schritt S2 ermittelten modifizierten Filtermatrix $\tilde{f}$ sowie der in Schritt S3 ermittelten modifizierten Matrix $\tilde{b}$ lässt sich voranstehende Gleichung wie folgt umformulieren.

$$\frac{I - \tilde{\mu}}{\sigma} * f + b = I * \frac{f}{\sigma} - \tilde{\mu} * \frac{f}{\sigma} + b = I * \tilde{f} + \tilde{b},$$

wobei $\tilde{f} = \frac{f}{\sigma}$ die modifizierte Filtermatrix und $\tilde{b} = -\tilde{\mu} * \frac{f}{\sigma} + b$ die modifizierte Matrix sind.

Die erste Normierungsgröße v kann daher ein Kehrwert der Standardabweichung σ sein und/oder mit dem Kehrwert korrelieren und die zweite Normierungsgröße w kann das Negative des Verhältnisses des Mittelwerts μ zur Standardabweichung σ sein und/oder mit diesem Verhältnis korrelieren.

In einem weiteren Schritt S4 wird sodann die Eingangsmatrix I in die Ausgangsmatrix A überführt. Hierzu wird die Eingangsmatrix I mit der modifizierten Filtermatrix $\tilde{f}$ gefaltet und das Ergebnis dieser Faltung wird durch Addition mit der modifizierten Matrix $\tilde{b}$ verschoben, wie in nachfolgender Gleichung angegeben:

$$I * \tilde{f} + \tilde{b} = A.$$

Wie den voranstehenden vier Gleichungen zu entnehmen ist, kann somit durch die modifizierte Filtermatrix $\tilde{f}$ und die modifizierte Matrix $\tilde{b}$ die Normierung der Eingangsmatrix I in vorteilhafter Weise zusammen mit der Faltung der Eingangsmatrix I mit der modifizierten Filtermatrix $\tilde{f}$ sowie zusammen mit der Verschiebung des Ergebnisses dieser Faltung durch die modifizierte Matrix $\tilde{b}$ erfolgen.

Das voranstehend erläuterte Verfahren kann in der Eingangsschicht 12a erfolgen. Insbesondere kann das erläuterte Verfahren ausschließlich in der Eingangsschicht 12a erfolgen. Alternativ kann das erläuterte Verfahren in jeder beliebigen, insbesondere in allen, Faltungsschichten 12a-c durchgeführt werden.

Im Folgenden wird das erfindungsgemäße Verfahren einem konventionellen Verfahren zum Betreiben des neuronalen Netzes gegenübergestellt. Im konventionellen Verfahren wird die Eingangsmatrix I zunächst normiert und das Ergebnis der Normierung wird mit der ursprünglichen Filtermatrix f gefaltet. Das Ergebnis dieser Faltung wird sodann mit der ursprünglichen Matrix addiert, um die Ausgangsmatrix A zu generieren. Das konventionelle Verfahren kann daher mit der Gleichung $\frac{I - \tilde{\mu}}{\sigma} * f + b = A$ beschrieben werden. In dem konventionellen Verfahren sind daher die Normierungsoperation sowie die Faltung und Verschiebung getrennt. Der erste Schritt ist dabei die Normierung, welche für jede Eingangsmatrix I sowohl während des Trainings des neuronalen Netzes 10 als auch während des Betriebes des trainierten neuronalen Netzes 10 durchgeführt wird. Die Normierung umfasst dabei die Subtraktion des Mittelwerts μ von allen Einträgen der Eingangsmatrix I sowie das Teilen durch die Standardabweichung σ. In einem zweiten Schritt wird in dem konventionellen Verfahren die normierte Eingangsmatrix mit der ursprünglichen Filtermatrix f gefaltet und das Ergebnis dieser Faltung wird durch Addition mit der ursprünglichen Verschiebungsoperation verschoben.

Im Gegensatz dazu wird in dem erfindungsgemäßen Verfahren die Normierungsoperation mit der Faltungsoperation und der Verschiebungsoperation durch Anwenden der modifizierten Filtermatrix $\tilde{f}$ und der modifizierten Matrix $\tilde{b}$ kombiniert. Zur Ermittlung der modifizierten Filtermatrix $\tilde{f}$ werden die Einträge der ursprünglichen Filtermatrix f durch

die Standardabweichung $\sigma$ geteilt. Schritt S2 kann daher einen Teilschritt des Ermittelns des Verhältnisses von Einträgen der ursprünglichen Filtermatrix f und der Standardabweichung $\sigma$ umfassen. Zur Ermittlung der modifizierten Matrix $\tilde{b}$ wird ferner die modifizierte Filtermatrix $\tilde{f}$ mit der Normierungsmatrix $\tilde{\mu}$ gefaltet und das Ergebnis dieser Faltung wird von der ursprünglichen Matrix b abgezogen. Dadurch kann die Eingangsmatrix I in unveränderter und/oder nicht normierter Form mit der modifizierten Filtermatrix $\tilde{f}$ und der modifizierten Matrix $\tilde{b}$ in die Ausgangsmatrix A überführt werden.

Werden die Standardabweichung $\sigma$ und der Mittelwert $\mu$ basierend auf dem Trainingsdatensatz ermittelt, so kann die modifizierte Filtermatrix $\tilde{f}$ und die modifizierte Matrix $\tilde{b}$ einmalig ermittelt werden und während des Betriebes des trainierten neuronalen Netzes 10 ist keine weitere Anpassung der Eingangsmatrix I, der modifizierten Filtermatrix $\tilde{f}$ und/oder der modifizierten Matrix $\tilde{b}$ nötig. Dies kann den Rechenaufwand und/oder die Rechenzeit zur Verarbeitung eines Eingangsdatenelements und/oder eines Eingangsbildes I durch das neuronalen Netzes 10 im Vergleich zum konventionellen Verfahren signifikant reduzieren, da im konventionellen Verfahren jede Eingangsmatrix I zunächst normiert wird, bevor diese dem neuronalen Netz 10 zugeführt werden kann.

Werden die Standardabweichung $\sigma$ und der Mittelwert $\mu$ hingegen basierend auf der Eingangsmatrix I ermittelt, so kann es erforderlich sein, die modifizierte Filtermatrix $\tilde{f}$ und die modifizierte Matrix $\tilde{b}$ für die jeweilige Faltungsschicht 12a-c basierend auf der Standardabweichung $\sigma$ dieser Eingangsmatrix I und basierend auf dem Mittelwert $\mu$ dieser Eingangsmatrix I anzupassen. Da die modifizierte Filtermatrix $\tilde{f}$ und die modifizierte Matrix $\tilde{b}$ jedoch in der Regel eine kleinere Dimension als die Eingangsmatrix I aufweisen, kann auch in diesem Fall der Rechenaufwand und/oder die Rechenzeit im Vergleich zum konventionellen Verfahren signifikant reduziert sein.

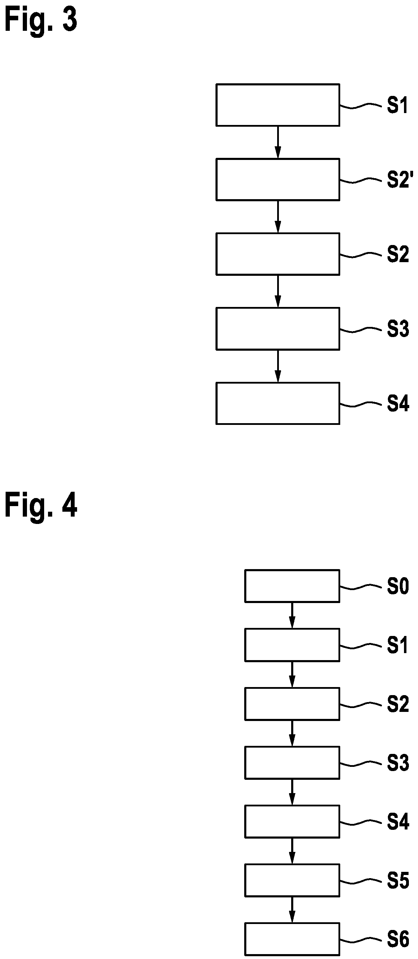

Fig. 3 zeigt ein Flussdiagramm zur Illustration von Schritten eines Verfahrens zum Betreiben eines neuronalen Netzes 10 gemäß einem Ausführungsbeispiel der Erfindung. Sofern nicht anders beschrieben, weist das in Figur 3 beschriebene Verfahren dieselben Elemente, Merkmale und Schritte wie das in Figur 2 beschrieben Verfahren auf. Insbesondere können die Schritte S1 bis S4 analog dem Verfahren der Figur 2 ausgestaltet sein.

Das in Figur 3 illustrierte Verfahren weist einen optionalen Schritt S2' auf, in welchem die Eingangsmatrix I in eine höherdimensionale Eingangsmatrix $\tilde{I}$ unter Hinzufügen von Einträgen überführt wird. Dieser Vorgang wird häufig auch als "Padding" bezeichnet und kann insbesondere dazu dienen, eine durch die Faltung bedingte Reduktion der Dimension der Ausgangsmatrix A im Vergleich zur Eingangsmatrix I zu kompensieren, so dass die Ausgangsmatrix A dieselbe Dimension aufweisen kann wie die Eingangsmatrix I.

Die bei Figur 2 beschriebenen Gleichungen gelten vornehmlich für den Fall, dass kein Padding angewendet wird. Die zugehörige Faltungsoperation der Eingangsmatrix I mit der modifizierten Filtermatrix $\tilde{f}$ wird in diesem Fall auch als "Valid Convolution" bezeichnet. Hier kann das neuronale Netz 10 auf reguläre Weise, d.h. analog dem konventionellen Verfahren, trainiert werden, wobei die Eingangsmatrix I mit der ersten Normierungsgröße v und der zweiten Normierungsgröße w, etwa der Standardabweichung $\sigma$ und dem Mittelwert, normiert werden kann. Optional kann jedoch die Eingangsmatrix I einer derjenigen Faltungsschicht, in welcher das erfindungsgemäße Verfahren durchgeführt wird, nachgelagerten Faltungsschicht durch Hinzufügen von Einträgen mit dem Wert Null, sogenanntes Zero-Padding, in die höherdimensionale Eingangsmatrix $\tilde{I}$ überführt werden.

Werden daher während des Trainings des neuronalen Netzes 10 einer Faltungsschicht 12a-c, in welcher das erfindungsgemäße Verfahren implementiert ist, den dieser Faltungsschicht 12a-c zugeführten Eingangsmatrizen I (z.B. Trainingsbilder oder Trainingsdatenelemente) keine Einträge hinzugefügt, so können dieser Faltungsschicht 12a-c auch während des Betriebes des trainierten neuronalen Netzes 10 zugeführte Eingangsmatrizen I ohne Hinzufügen von Einträgen zu den Eingangsmatrizen I zugeführt werden. Nach dem Training des neuronalen Netzes 10, d.h. während des Betriebes des trainierten neuronalen Netzes 10, kann die Faltungsoperation und die Verschiebungsoperation daher gemäß dem in Figur 2 beschriebenen erfindungsgemäßen Verfahren erfolgen.

Wird hingegen während des Trainings des neuronalen Netzes 10 ein Padding durchgeführt und/oder werden während des Trainings der Eingangsmatrix I einer Faltungsschicht 12a-c, in welcher das erfindungsgemäße Verfahren implementiert ist, Einträge hinzugefügt, so kann es erforderlich sein, der Eingangsmatrix I dieser Faltungsschicht 12a-c auch während des Betriebes des trainierten neuronalen Netzes 10 Einträge hinzuzufügen, um die Eingangsmatrix I in die höherdimensionale Eingangsmatrix $\tilde{I}$ zu überführen. Wird die Anzahl der hinzugefügten Einträge so gewählt, dass die Dimension nach der Faltung die gleiche ist, so wird häufig auch von einer "Same Convolution" gesprochen. In Abhängigkeit der Hardware, auf welcher das neuronale Netz 10 implementiert ist, können der Eingangsmatrix I Einträge mit Nullen (sogenanntes "Zero-Padding") und/oder Einträge mit konstanten, von Null verschiedenen Werten (sogenanntes "Non-Zero-Padding") hinzugefügt werden.

Beispielsweise kann während des Trainings des neuronalen Netzes 10 die Eingangsmatrix auf konventionelle Weise durch Multiplikation der Eingangsmatrix mit der ersten Normierungsgröße v und durch Addition der zweiten Normierungsgröße w normiert werden. Ferner können während des Trainings der Eingangsmatrix I einer Faltungsschicht 12a-c, in welcher das erfindungsgemäße Verfahren implementiert ist, Einträge mit einem Wert von Null hinzugefügt werden (Zero-Padding). Das trainierte neuronale Netz 10 kann nach dem Training auf einer Hardware implementiert werden und/oder auf diese portiert werden, und es können in der jeweiligen Faltungsschicht 12a-c die modifizierte Filtermatrix $\tilde{f}$ und die modifizierte Matrix $\tilde{b}$ verwendet werden, wobei in diesem Fall in Schritt S2' während des Betriebes des bereits trainierten neuronalen Netzes 10 der Eingangsmatrix I Einträge hinzugefügt werden, welche jeweils das negative Verhältnis der zweiten Normierungsgröße v zur ersten Normierungsgröße w aufweisen können (Non-Zero-Padding).

Wird während des Trainings des neuronalen Netzes 10 die Eingangsmatrix auf konventionelle Weise durch Abziehen des Mittelwertes $\mu$ von den Einträgen der Eingangsmatrix I und durch Teilen durch die Standardabweichung $\sigma$ normiert und werden während des Trainings der Eingangsmatrix I einer Faltungsschicht 12a-c, in welcher das erfindungsgemäße Verfahren implementiert ist, Einträge mit einem Wert von Null hinzugefügt werden (Zero-Padding), so kann das trainierte neuronale Netz 10 nach dem Training auf einer Hardware implementiert werden und/oder auf diese portiert werden, und es können in der jeweiligen Faltungsschicht 12a-c die modifizierte Filtermatrix $\tilde{f}$ und die modifizierte Matrix $\tilde{b}$ verwendet werden, wobei in diesem Fall in Schritt S2' während des Betriebes des bereits trainierten neuronalen Netzes 10 der Eingangsmatrix I Einträge hinzugefügt werden, welche jeweils den in Schritt S1 ermittelten Mittelwert $\mu$ aufweisen (Non-Zero-Padding).

Alternativ kann während des Trainings des neuronalen Netzes 10 die Eingangsmatrix auf konventionelle Weise durch Multiplikation der Eingangsmatrix mit der ersten Normierungsgröße v und durch Addition der zweiten Normierungsgröße w normiert werden, und es können während des Trainings der Eingangsmatrix I einer Faltungsschicht 12a-c, in welcher das erfindungsgemäße Verfahren implementiert ist, Einträge hinzugefügt werden, welche jeweils einen Wert der zweiten Normierungsgröße w aufweisen (Non-Zero-Padding). Das trainierte neuronale Netz 10 kann nach dem Training auf einer Hardware implementiert und/oder auf diese portiert werden und es können in der jeweiligen Faltungsschicht 12a-c die modifizierte Filtermatrix $\tilde{f}$ und die modifizierte Matrix $\tilde{b}$ verwendet werden, wobei in diesem Fall in Schritt S2' während des Betriebes des bereits trainierten neuronalen Netzes 10 der Eingangsmatrix I Einträge hinzugefügt werden, welche jeweils den Wert Null aufweisen (Zero-Padding).

Wird während des Trainings des neuronalen Netzes 10 die Eingangsmatrix auf konventionelle Weise durch Abziehen des Mittelwertes $\mu$ von den Einträgen der Eingangsmatrix I und durch Teilen durch die Standardabweichung $\sigma$ normiert, und werden während des Trainings der Eingangsmatrix I einer Faltungsschicht 12a-c, in welcher das erfindungsgemäße Verfahren implementiert ist, Einträge hinzugefügt werden, welche jeweils einen Wert des negativen Verhältnisses des Mittelwerts $\mu$ zur Standardabweichung $\sigma$, d.h. einen Wert von $-\mu/\sigma$, aufweisen (Non-Zero-Padding), so kann das trainierte neuronale Netz 10 nach dem Training auf einer Hardware implementiert und/oder auf diese portiert werden und es können in der jeweiligen Faltungsschicht 12a-c die modifizierte Filtermatrix $\tilde{f}$ und die modifizierte Matrix $\tilde{b}$ verwendet werden, wobei in diesem Fall in Schritt S2' während des Betriebes des bereits trainierten neuronalen Netzes 10 der Eingangsmatrix I Einträge hinzugefügt werden, welche jeweils den Wert Null aufweisen (Zero-Padding).

Beispielsweise kann voranstehend beschriebenes Hinzufügen von Einträgen zur Eingangsmatrix I ausschließlich in der Eingangsschicht 12a des neuronalen Netzes erfolgen. Für alle anderen Faltungsschichten 12b, 12c kann während des Betriebes des trainierten neuronalen Netzes 10 dasselbe Padding verwendet werden wie während des Trainings. Alternativ kann voranstehend beschriebenes Hinzufügen von Einträgen zur Eingangsmatrix I jedoch in jeder der Faltungsschichten 12a-c erfolgen.

Fig. 4 zeigt ein Flussdiagramm zur Illustration von Schritten eines Verfahrens zum Betreiben eines neuronalen Netzes 10 gemäß einem Ausführungsbeispiel der Erfindung. Insbesondere umfasst das in Figur 4 illustrierte Verfahren das Training des neuronalen Netzes 10 und den Betrieb des bereits trainierten neuronalen Netzes 10. Exemplarisch wird im Folgenden das erfindungsgemäße Verfahren nur in der Eingangsschicht 12a durchgeführt, kann jedoch optional auch in jeder beliebigen Faltungsschicht 12a-c implementiert sein. Sofern nicht anders beschrieben, weist das in Figur 4 beschriebene Verfahren dieselben Elemente, Merkmale und Schritte wie die in voranstehenden Figuren beschriebenen Verfahren auf.

In einem dem Training des neuronalen Netzes 10 vorgelagerten Schritt S0 werden der Mittelwert $\mu$ und die Standradabweichung $\sigma$ basierend auf einem Trainingsdatensatz ermittelt, wie bei Figur 2 erläutert. Schritt S0 kann daher auch einen Teilschritt des Bereitstellens eines Trainingsdatensatzes, etwa in einer Speichervorrichtung 11, umfassen. Alternativ können, wie bei Figur 2 beschrieben, der Mittelwert $\mu$ und die Standardabweichung $\sigma$ auch basierend auf der Eingangsmatrix I berechnet werden.

Während des Trainings des neuronalen Netzes 10 werden dem neuronalen Netz 10 bzw. der Eingangsschicht 12a in Schritt S1 Trainingsdatenelemente, etwa Trainingsbilder, zugeführt. Diese können in Schritt S1 durch Abziehen des Mittelwertes $\mu$ von den Einträgen jedes Trainingsdatenelements und Teilen des Ergebnisses dieser Subtraktion durch die Standardabweichung $\sigma$ normiert werden. Die Trainingsdatenelemente können gleichsam eine Eingangsmatrix I, so wie in voranstehenden Figuren beschrieben, für die Eingangsschicht 12a darstellen.

Diese Eingangsmatrizen I bzw. Trainingsdatenelemente können in einem optionalen Schritt S2 durch Hinzufügen von Einträgen mit dem Wert Null oder durch Hinzufügen von Einträgen mit dem Wert $-\mu/\sigma$ in höherdimensionale Eingangsmatrizen $\tilde{I}$ bzw. höherdimensionale Trainingsdatenelemente überführt werden, wie in Figur 3 beschrieben. Werden den Eingangsmatrizen I der Eingangsschicht 12a keine Einträge hinzugefügt, so können der Ausgangsmatrix A der Eingangsschicht 12a Einträge, etwa mit einem Wert von Null, hinzugefügt werden, um einen faltungsbedingten Dimensionsverlust nach der Eingangsschicht 12a zu kompensieren.

In einem Schritt S3 kann dann das eigentliche Training des neuronalen Netzes 10 erfolgen. Als Ergebnis des Trainings können die Einträge der ursprünglichen Filtermatrix f sowie der ursprünglichen Matrix b ermittelt werden, welche gleichsam trainierte Gewichte, Parameter und/oder Parameterwerte des neuronalen Netzes 10 bezeichnen können.

Das trainierte neuronale Netz 10 kann zum Betrieb des trainierten neuronalen Netzes 10 auf einer Hardware implementiert und/oder auf eine Hardware portiert werden. In einem Schritt S4 werden dem neuronalen Netz 10 und/oder der Eingangsschicht 12a nicht normierte Eingangsdatenelemente I, Eingangsmatrizen I und/oder Eingangsbilder I zur Interpretation und/oder Klassifikation zugeführt.

Wurden in dem optionalen Schritt S2 den Trainingsdatenelementen Einträge mit dem Wert Null hinzugefügt, so werden in Schritt S4 den Eingangsmatrizen I Einträge mit einem Wert von $\mu$ hinzugefügt. Wurden hingegen in dem optionalen Schritt S2 den Trainingsdatenelementen Einträge mit dem Wert $-\mu/\sigma$ hinzugefügt, so werden in Schritt S4 den Eingangsmatrizen I Einträge mit einem Wert von Null hinzugefügt. Wenn der optionale Schritt S2 hingegen nicht durchgeführt wurde, so werden den Eingangsmatrizen I keine Einträge hinzugefügt.

In einem Schritt S5 werden sodann die Eingangsmatrizen I der Eingangsschicht 12a durch Anwendung der modifizierten Filtermatrix $\tilde{f}$ und der modifizierten Matrix $\tilde{b}$ in Ausgangsmatrizen A überführt, wie bei den Figuren 2 und 3 im Detail erläutert ist.

Das neuronale Netz 10 kann ferner die Ausgangsmatrizen A durch weitere Schichten 12b, 12c propagieren und die Ausgabe 14 ausgeben. Die Ausgabe 14 kann etwa eine vorhergesagte Objektklasse, eine semantische Segmentation und/oder eine beliebige andere Größe sein.

Ergänzend ist darauf hinzuweisen, dass "umfassend" keine anderen Elemente ausschließt und "eine" oder "ein" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.


**Patentansprüche**

1. Computerimplementiertes Verfahren zum Betreiben eines künstlichen neuronalen Netzes (10), wobei dem künstlichen neuronalen Netz ein Bild zugeführt wird, wobei das künstliche neuronale Netz einen Wahrscheinlichkeitswert und/oder eine Wahrscheinlichkeit ausgibt, mit welcher ein in dem Bild enthaltenes Objekt einer bestimmten Klasse von Objekten und/oder einer Objektklasse zugeordnet werden kann oder wobei das künstliche neuronale Netz eine semantische Segmentierung des Bildes ausgibt, wobei das neuronale Netz (10) wenigstens eine Faltungsschicht (12a-c) aufweist, die dazu eingerichtet ist, eine Eingangsmatrix (I) der Faltungsschicht (12a-c) basierend auf einer Faltungsoperation und einer Verschiebungsoperation in eine Ausgangsmatrix (A) zu überführen, das Verfahren aufweisend die Schritte:

   • Ermitteln wenigstens einer ersten Normierungsgröße und einer zweiten Normierungsgröße basierend auf Einträgen der Eingangsmatrix (I) und/oder basierend auf einem Trainingsdatensatz des neuronalen Netzes (10), **dadurch gekennzeichnet, dass** das Verfahren ferner die Schritte aufweist:
   • Ermitteln einer modifizierten Filtermatrix ($\tilde{f}$), wobei die modifizierte Filtermatrix ($\tilde{f}$) durch eine Division einer ursprünglichen Filtermatrix (f) der wenigstens einen Faltungsschicht (12a-c) durch die ermittelte erste Normierungsgröße ermittelt wird;
   • Ermitteln einer modifizierten Matrix ($\tilde{b}$), wobei die modifizierte Matrix ($\tilde{b}$) durch eine Multiplikation einer ursprünglichen Matrix (b) der wenigstens einen Faltungsschicht (12a-c) mit der ermittelten und negierten ersten Normierungsgröße und anschließender Addition der zweiten Normierungsgröße ermittelt wird; und
   • Überführen der Eingangsmatrix (I) in die Ausgangsmatrix (A) basierend auf der modifizierten Filtermatrix ($\tilde{f}$) und der modifizierten Matrix ($\tilde{b}$), wobei die Eingangsmatrix (I) mittels einer Faltung mit der modifizierten Faltungsmatrix ($\tilde{f}$) und einer anschließenden Addition der modifizierten Matrix ($\tilde{b}$) zum Ergebnis der Faltung ermittelt wird.

2. Verfahren nach Anspruch 1,
   wobei die erste Normierungsgröße eine mit einer Standardabweichung ($\sigma$) korrelierende Größe und/oder eine Standardabweichung ist; und/oder wobei die zweite Normierungsgröße eine mit einem Mittelwert ($\mu$) korrelierende Größe und/oder ein Mittelwert ($\mu$) ist.

3. Verfahren nach Anspruch 2,

wobei die zweite Normierungsgröße ein Mittelwert ($\mu$) von Einträgen der Eingangsmatrix (I) ist; und/oder
wobei die erste Normierungsgröße eine Standardabweichung ($\sigma$) von Einträgen der Eingangsmatrix (I) ist.

4. Verfahren nach Anspruch 2,
wobei die erste Normierungsgröße eine Standardabweichung ($\sigma$) ist und die zweite Normierungsgröße ein Mittelwert ($\mu$) ist, wobei die Standardabweichung ($\sigma$) und der Mittelwert ($\mu$) basierend auf Trainingsbildern des Trainingsdatensatz des neuronalen Netzes (10) ermittelt werden.

5. Verfahren nach einem der Ansprüche 2 bis 4, ferner aufweisend:

Überführen der Eingangsmatrix (I) in eine höherdimensionale Eingangsmatrix ($\tilde{I}$) unter Hinzufügen von Einträgen zu der Eingangsmatrix (I);
wobei, während einer Inferenz des neuronalen Netzes (10) die hinzugefügten Einträge jeweils die zweite Normierungsgröße aufweisen, wobei die zweite Normierungsgröße ein Mittelwert ($\mu$) ist; und/oder
wobei während eines Trainings des neuronalen Netzes die hinzugefügten Einträge jeweils einen Wert von Null aufweisen.

6. Verfahren nach einem der Ansprüche 2 bis 4, ferner aufweisend:

Überführen der Eingangsmatrix (I) in eine höherdimensionale Eingangsmatrix ($\tilde{I}$) unter Hinzufügen von Einträgen zu der Eingangsmatrix (I);
wobei, wenn das neuronale Netz trainiert ist, die hinzugefügten Einträge jeweils einen Wert von Null aufweisen; und/oder
wobei während eines Trainings des neuronalen Netzes die hinzugefügten Einträge jeweils einen negativen Wert des Verhältnisses der zweiten Normierungsgröße zu der ersten Normierungsgröße aufweisen, wobei die zweite Normierungsgröße ein Mittelwert ($\mu$) ist und die ersten Normierungsgröße eine Standardabweichung ($\sigma$) ist.

7. Verfahren einem der voranstehenden Ansprüche,

wobei die wenigstens eine Faltungsschicht (12a-c) eine Eingangsschicht (12a) des neuronalen Netzes (10) ist; und/oder
wobei die Eingangsmatrix (I) ein Eingangsbild ist, welches dem neuronalen Netz (10) zugeführt wird.

8. Verfahren nach Anspruch 12,
wobei die modifizierte Filtermatrix ($\tilde{f}$) und die modifizierte Matrix ($\tilde{b}$) ausschließlich in der Eingangsschicht (12a) des neuronalen Netzes (10) angewendet werden.

9. Verfahren nach einem der Ansprüche 1 bis 12, wobei das neuronale Netz (10) mehrere Faltungsschichten (12a-c) aufweist, welche jeweils dazu eingerichtet sind, eine Eingangsmatrix (I) der jeweiligen Faltungsschicht (12a-c) in eine Ausgangsmatrix (A) der jeweiligen Faltungsschicht (12a-c) zu überführen;

wobei für jede Faltungsschicht (12a-c) eine modifizierte Faltungsmatrix ($\tilde{f}$) und eine modifizierte Matrix ($\tilde{b}$) ermittelt werden; und
wobei jede Eingangsmatrix (I) jeder Faltungsschicht (12a-c) unter Anwendung der für die jeweilige Faltungsschicht (12a-c) ermittelten modifizierten Filtermatrix ($\tilde{f}$) und der für die jeweilige Faltungsschicht (12a-c) ermittelten modifizierten Matrix ($\tilde{b}$) in eine Ausgangsmatrix (A) überführt wird.

10. Computerimplementiertes künstliches neuronales Netz (10), welches gemäß einem der voranstehenden Ansprüche betrieben wird, wobei das künstliche neuronale Netz wenigstens eine Faltungsschicht (12a-c) aufweist, die dazu eingerichtet ist, eine Eingangsmatrix (I) der Faltungsschicht (12a-c) basierend auf einer Faltungsoperation und einer Verschiebungsoperation in eine Ausgangsmatrix (A) zu überführen.

**Claims**

1. Computer-implemented method for operating an artificial neural network (10), wherein an image is supplied to the artificial neural network, wherein the artificial neural network outputs a probability value and/or a probability of an object contained in the image being able to be assigned to a specific class of objects and/or object class, or wherein the artificial neural network outputs a semantic segmentation of the image, wherein the neural network (10) has at least one convolutional layer (12a-c) that is configured to convert an input matrix (I) of the convolutional layer (12a-c) into an output matrix (A) based on a convolution operation and a shift operation, the method comprising the following steps:

• Determining at least one first normalization variable and one second normalization variable based on entries of the input matrix (I) and/or based on a training dataset of the neural network (10), **characterized in that** the method furthermore comprises the following steps:
• Determining a modified filter matrix ($\tilde{f}$), wherein the modified filter matrix ($\tilde{f}$) is determined by dividing an original filter matrix (f) of the at least one convolutional layer (12a-c) by the determined first normalization variable;
• Determining a modified matrix ($\tilde{b}$), wherein the modified matrix ($\tilde{b}$) is determined by multiplying an original matrix (b) of the at least one convolutional layer (12a-c) by the determined and negated first normalization variable and subsequently adding the second normalization variable; and
• Converting the input matrix (I) into the output matrix (A) based on the modified filter matrix ($\tilde{f}$) and the modified matrix ($\tilde{b}$), wherein the input matrix (I) is determined by way of a convolution with the modified convolution matrix ($\tilde{f}$) and a subsequent addition of the modified matrix ($\tilde{b}$) to the result of the convolution.

2. Method according to Claim 1,
wherein the first normalization variable is a variable correlating with a standard deviation ($\sigma$) and/or is a standard deviation; and/or wherein the second normalization variable is a variable correlating with a mean ($\mu$) and/or is a mean ($\mu$).

3. Method according to Claim 2,

wherein the second normalization variable is a mean ($\mu$) of entries of the input matrix (I); and/or
wherein the first normalization variable is a standard deviation ($\sigma$) of entries of the input matrix (I).

4. Method according to Claim 2,
wherein the first normalization variable is a standard deviation ($\sigma$) and the second normalization variable is a mean ($\mu$), wherein the standard deviation ($\sigma$) and the mean ($\mu$) are determined based on training images of the training dataset of the neural network (10).

5. Method according to one of Claims 2 to 4, furthermore comprising:

converting the input matrix (I) into a higher-dimensional input matrix ($\tilde{I}$) with addition of entries to the input matrix (I);
wherein, during an inference of the neural network (10), the added entries each have the second normalization variable, wherein the second normalization variable is a mean ($\mu$); and/or
wherein, during training of the neural network, the added entries each have a value of zero.

6. Method according to one of Claims 2 to 4, furthermore comprising:

converting the input matrix (I) into a higher-dimensional input matrix ($\tilde{I}$) with addition of entries to the input matrix (I);
wherein, when the neural network is trained, the added entries each have a value of zero; and/or
wherein, during training of the neural network, the added entries each have a negative value of the ratio of the second normalization variable to the first normalization variable, wherein the second normalization variable is a mean ($\mu$) and the first normalization variable is a standard deviation ($\sigma$).

7. Method according to one of the preceding claims,
wherein the at least one convolutional layer (12a-c) is an input layer (12a) of the neural network (10); and/or wherein the input matrix (I) is an input image that is supplied to the neural network (10).

8. Method according to Claim 12,
wherein the modified filter matrix ($\tilde{f}$) and the modified matrix ($\tilde{b}$) are applied exclusively in the input layer (12a) of the neural network (10).

9. Method according to one of Claims 1 to 12, wherein the neural network (10) has a plurality of convolutional layers (12a-c), which are each configured to convert an input matrix (I) of the respective convolutional layer (12a-c) into an output matrix (a) of the respective convolutional layer (12a-c);

wherein a modified convolution matrix ($\tilde{f}$) and a modified matrix ($\tilde{b}$) are determined for each convolutional layer (12a-c); and
wherein each input matrix (I) of each convolutional layer (12a-c) is converted into an output matrix (A) using the modified filter matrix ($\tilde{f}$) determined for the respective convolutional layer (12a-c) and the modified matrix ($\tilde{b}$) determined for the respective convolutional layer (12a-c) .

10. Computer-implemented artificial neural network (10) that is operated according to one of the preceding claims, wherein the artificial neural network has at least one convolutional layer (12a-c) that is configured to convert an input matrix (I) of the convolutional layer (12a-c) into an output matrix (A) based on a convolution operation and a shift operation.

**Revendications**

1. Procédé mis en œuvre par ordinateur pour faire fonctionner un réseau neuronal artificiel (10), une image étant fournie au réseau neuronal artificiel, le réseau neuronal artificiel délivrant une valeur de probabilité et/ou une probabilité avec laquelle un objet contenu dans l'image peut être associé à une classe déterminée d'objets et/ou à une classe d'objets, ou le réseau neuronal artificiel délivrant une segmentation sémantique de l'image, le réseau neuronal (10) possédant au moins une couche de convolution (12a-c), laquelle est conçue pour convertir une matrice d'entrée (I) de la couche de convolution (12a-c) en une matrice de sortie (A) sur la base d'une opération de convolution et d'une opération de décalage, le procédé comprenant les étapes de :

• détermination d'au moins une première grandeur de normalisation et d'une deuxième grandeur de normalisation sur la base d'entrées de la matrice d'entrée (I) et/ou sur la base d'un ensemble de données d'entraînement du réseau neuronal (10), **caractérisé en ce que** le procédé comprend en outre les étapes suivantes :
• détermination d'une matrice de filtre modifiée ($\tilde{f}$), la matrice de filtre modifiée ($\tilde{f}$) étant déterminée par une division d'une matrice de filtre initiale (f) de l'au moins une couche de convolution (12a-c) par la première grandeur de normalisation déterminée ;
• détermination d'une matrice modifiée ($\tilde{b}$), la matrice modifiée ($\tilde{b}$) étant déterminée par une multiplication d'une matrice initiale (b) de l'au moins une couche de convolution (12a-c) par le négatif de la première grandeur de normalisation déterminée et ensuite une addition de la deuxième grandeur de normalisation ; et
• conversion de la matrice d'entrée (I) en la matrice de sortie (A) sur la base de la matrice de filtre modifiée ($\tilde{f}$) et de la matrice modifiée ($\tilde{b}$), la matrice d'entrée (I) étant déterminée au moyen d'une convolution avec la matrice de convolution modifiée ($\tilde{f}$) et ensuite d'une addition de la matrice modifiée ($\tilde{b}$) au résultat de la convolution.

2. Procédé selon la revendication 1,
la première grandeur de normalisation étant une grandeur corrélée avec un écart-type ($\sigma$) et/ou un écart-type ; et/ou la deuxième grandeur de normalisation étant une grandeur corrélée avec une valeur moyenne ($\mu$) et/ou une valeur moyenne ($\mu$).

3. Procédé selon la revendication 2,
la deuxième grandeur de normalisation étant une valeur moyenne ($\mu$) d'entrées de la matrice d'entrée (I) ; et/ou la première grandeur de normalisation étant un écart-type ($\sigma$) d'entrées de la matrice d'entrée (I).

4. Procédé selon la revendication 2,
la première grandeur de normalisation étant un écart-type ($\sigma$) et la deuxième grandeur de normalisation étant une valeur moyenne ($\mu$), l'écart-type ($\sigma$) et la valeur moyenne ($\mu$) étant déterminées sur la base d'images d'entraînement de l'ensemble de données d'entraînement du réseau neuronal (10).

5. Procédé selon l'une des revendications 2 à 4, comprenant en outre :

conversion de la matrice d'entrée (I) en une matrice d'entrée de dimension supérieure ($\tilde{I}$) en ajoutant des entrées à la matrice d'entrée (I) ;
pendant une inférence du réseau neuronal (10), les entrées ajoutées présentant respectivement la deuxième grandeur de normalisation, la deuxième grandeur de normalisation étant une valeur moyenne ($\mu$) ; et/ou pendant un entraînement du réseau neuronal, les entrées ajoutées présentant respectivement une valeur de zéro.

**6.** Procédé selon l'une des revendications 2 à 4, comprenant en outre :

conversion de la matrice d'entrée (I) en une matrice d'entrée de dimension supérieure ($\tilde{I}$) en ajoutant des entrées à la matrice d'entrée (I) ;
lorsque le réseau neuronal est entraîné, les entrées ajoutées présentant respectivement une valeur de zéro ; et/ou
pendant l'entraînement du réseau neuronal, les entrées ajoutées présentant respectivement une valeur négative du rapport de la deuxième grandeur de normalisation par la première grandeur de normalisation, la deuxième grandeur de normalisation étant une valeur moyenne ($\mu$) et la première grandeur de normalisation étant un écart-type ($\sigma$).

**7.** Procédé selon l'une des revendications précédentes, l'au moins une couche de convolution (12a-c) étant une couche d'entrée (12a) du réseau neuronal (10) ; et/ou la matrice d'entrée (I) étant une image d'entrée qui est fournie au réseau neuronal (10).

**8.** Procédé selon la revendication 12,
la matrice de filtre modifiée ($\tilde{f}$) et la matrice modifiée ($\tilde{b}$) étant utilisées exclusivement dans la couche d'entrée (12a) du réseau neuronal (10).

**9.** Procédé selon l'une des revendications 1 à 12, le réseau neuronal (10) possédant plusieurs couches de convolution (12a-c), lesquelles sont respectivement conçues pour convertir une matrice d'entrée (I) de la couche de convolution (12a-c) respective en une matrice de sortie (A) de la couche de convolution (12a-c) respective ;

une matrice de convolution modifiée ($\tilde{f}$) et une matrice modifiée ($\tilde{b}$) étant déterminées pour chaque couche de convolution (12a-c) ; et
chaque matrice d'entrée (I) de chaque couche de convolution (12a-c) étant convertie en une matrice de sortie (A) en utilisant la matrice de filtre modifiée ($\tilde{f}$) déterminée pour la couche de convolution (12a-c) respective et la matrice modifiée ($\tilde{b}$) déterminée pour la couche de convolution (12a-c) respective.

**10.** Réseau neuronal artificiel mis en œuvre par ordinateur (10), lequel fonctionne selon l'une des revendications précédentes, le réseau neuronal artificiel possédant au moins une couche de convolution (12a-c) qui est conçue pour convertir une matrice d'entrée (I) de la couche de convolution (12a-c) en une matrice de sortie (A) sur la base d'une opération de convolution et d'une opération de décalage.

## Fig. 1

## Fig. 2

# Fig. 3

# Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **LOFFE et al.** *Batch Normalization: Accelerating Deep Network Training by Reducing Internal Covariate Shift,* 2015, https://arxiv.org/abs/1502.03167